# EUROPEAN PATENT APPLICATION

(11) **EP 4 674 599 A1**
(43) Date of publication of application: **07.01.2026**
(21) Application number: 24784622.3
(22) Date of filing: 21.02.2024
(51) Int. Cl.: B29C 55/16, B29C 55/20

(54) **STRETCHING MACHINE AND RAIL FOR STRETCHING MACHINE**

(30) Priority: 05.04.2023 JP 2023061623
(71) Applicant: The Japan Steel Works, Ltd., Tokyo 141-0032 (JP)
(72) Inventor: KATO, Masaki, Tokyo 141-0032 (JP); NAKAJIMA, Ichiro, Tokyo 141-0032 (JP)
(74) Representative: Simmons & Simmons LLP (Munich)
(86) International application number: PCT/JP2024/006357
(87) International publication number: WO 2024/209820

(57) **Abstract**

A stretching machine comprises: a plurality of link structures which are connected to form an endless chain; and a rail 14 on which the link structures travel. The rail 14 is constituted by connecting a plurality of partial rails 141 along an extension direction in which the rail 14 extends. A plate member 147 is attached to at least one of two side surfaces 142 of the rail 14. The length of the plate member 147 along the extension direction is greater than the length of the partial rails 141 along the extension direction.

## Description

### TECHNICAL FIELD

The present invention relates to a stretching machine and a rail for a stretching machine.

### BACKGROUND ART

A stretching machine configured to stretch a thin film (for example, resin sheet or resin film) in a longitudinal direction and a transverse direction while conveying it has been known. Patent Document 1 discloses a simultaneous biaxial stretching machine in which longitudinal stretching and transverse stretching of a sheet-like material are performed. The simultaneous biaxial stretching machine disclosed in Patent Document 1 includes endless link devices. The endless link device is made up of rails and a plurality of equal-length link units moving along the rails, and each equal-length link unit includes rollers moving on the rails while rotating.

### RELATED ART DOCUMENTS

### PATENT DOCUMENTS

Patent Document 1: Japanese Patent No. 4379306

### SUMMARY OF THE INVENTION

### PROBLEMS TO BE SOLVED BY THE INVENTION

The rail is configured by connecting a plurality of partial rails. In the case where the link device moves on such a rail, vibrations occur when the roller passes over a joint portion between the partial rails.

Other objects and novel features will be apparent from the description of this specification and the accompanying drawings.

### MEANS FOR SOLVING THE PROBLEMS

A rail of a stretching machine according to one embodiment is configured by connecting a plurality of partial rails. A plate member is attached to at least one of two side surfaces of the rail. A length of the plate member along an extending direction is longer than a length of the partial rail along the extending direction.

### EFFECTS OF THE INVENTION

According to one embodiment, it is possible to suppress the occurrence of vibrations when the link device moves.

### BRIEF DESCRIPTIONS OF THE DRAWINGS

[FIG. 1] FIG. 1 is a schematic view showing a thin-film manufacturing system according to the embodiment.
[FIG. 2] FIG. 2 is a plan view schematically showing a structure of a stretching machine according to the embodiment.
[FIG. 3] FIG. 3 is another plan view schematically showing the structure of the stretching machine according to the embodiment.
[FIG. 4A] FIG. 4A is a plan view schematically showing link mechanisms and rails according to the embodiment.
[FIG. 4B] FIG. 4B is another plan view schematically showing the link mechanisms and the rails according to the embodiment.
[FIG. 5] FIG. 5 is a plan view showing one of the plurality of link mechanisms according to the embodiment in an enlarged manner.
[FIG. 6] FIG. 6 is a cross-sectional view of the link mechanism according to the embodiment.
[FIG. 7] FIG. 7 is a partially enlarged cross-sectional view showing guide rollers and surrounding structures thereof according to the embodiment.
[FIG. 8] FIG. 8 is an external perspective view of a part of the rail according to the embodiment.
[FIG. 9A] FIG. 9A is a cross-sectional view of the rail according to the embodiment taken along a line A-A shown in FIG. 8.
[FIG. 9B] FIG. 9B is a cross-sectional view of the rail according to the embodiment taken along a line B-B shown in FIG. 8.

### DETAILED DESCRIPTION OF PREFERRED EMBODIMENTS

Hereinafter, an embodiment will be described in detail with reference to the drawings. Note that the members having the same or substantially same function are denoted by the same reference characters throughout the drawings for describing the embodiment, and the repetitive description thereof will be omitted.

### <Configuration of Manufacturing System>

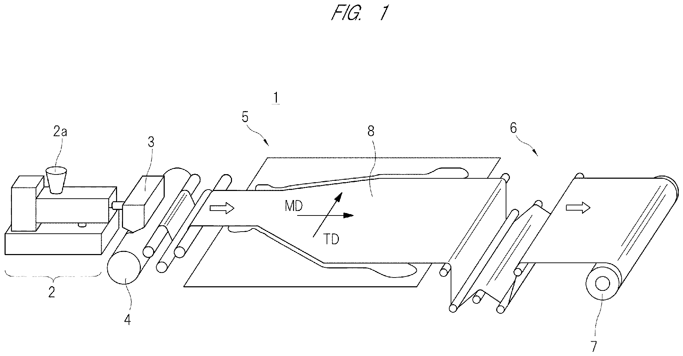

FIG. 1 is a schematic view showing a thin-film manufacturing system including a stretching machine according to the embodiment. A thin-film manufacturing system 1 shown in FIG. 1 includes an extrusion apparatus (extruder, kneading extruder) 2, a T-die 3, a raw sheet cooling apparatus 4, a stretching machine 5, a take-off apparatus 6, and a winder apparatus 7.

In the thin-film manufacturing system 1, a resin film is manufactured through the following process. First, a raw material is supplied to the extrusion apparatus 2. More specifically, a resin material (for example, thermoplastic resin material in pellet shape) is supplied to a material supply unit (material supply port, hopper) 2a of the extrusion apparatus 2.

The raw material supplied to the extrusion apparatus 2 is conveyed while being kneaded (mixed). More specifically, the raw material supplied to the extrusion apparatus 2 is melted and kneaded while being sent forward by the rotation of screws in the extrusion apparatus 2.

The raw material kneaded by the extrusion apparatus 2 (kneaded material) is fed to the T-die 3. The kneaded material fed to the T-die 3 passes through the T-die 3 and is extruded toward the raw sheet cooling apparatus 4 through a slit of the T-die 3. The kneaded material is formed into a desired shape (in this case, film-like shape) by passing through the T-die 3.

The kneaded material is continuously extruded from the T-die 3 toward the raw sheet cooling apparatus 4. The kneaded material extruded from the T-die 3 is cooled in the raw sheet cooling apparatus 4 to be a resin film 8. Then, the resin film 8 is supplied to the stretching machine 5.

The resin film 8 supplied to the stretching machine 5 is stretched in an MD direction and a TD direction by the stretching machine 5. The resin film 8 subjected to a stretching process (stretching treatment) by the stretching machine 5 is conveyed to the winder apparatus 7 via the take-off apparatus 6 and is wound by the winder apparatus 7. The resin film 8 wound by the winder apparatus 7 is cut as needed.

The thin-film manufacturing system 1 shown in FIG. 1 manufactures the thin film through the process described above. Understandably, the thin-film manufacturing system 1 can be modified in various ways in accordance with the properties and the like of the thin film to be manufactured. For example, an extraction tank may be installed near the take-off apparatus 6 shown in FIG. 1, and a plasticizer (for example, paraffin) contained in the resin film 8 may be removed in some cases.

The stretching machine 5 constituting the thin-film manufacturing system 1 stretches the resin film 8 in the MD direction and the TD direction while conveying the resin film 8 in the MD direction. In other words, the MD (Machine Direction) direction is a conveying direction of the resin film 8. Also, the TD (Transverse Direction) direction is a direction that intersects the conveying direction of the resin film 8. Thus, in the following description, the MD direction is referred to as a "conveying direction" or a "longitudinal direction", and the TD direction is referred to as a "transverse direction" in some cases. The MD direction (conveying direction, longitudinal direction) and the TD direction (transverse direction) are the directions intersecting each other, and are more specifically the directions orthogonal to each other. Namely, the stretching machine 5 shown in FIG. 1 is a stretching machine capable of simultaneously stretching the resin film 8 in two directions intersecting each other while conveying the resin film 8, and is referred to as a "simultaneous biaxial stretching machine" in general.

### <Stretching Machine>

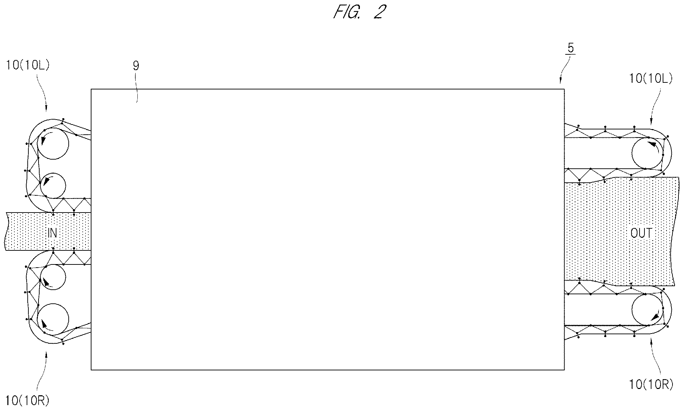

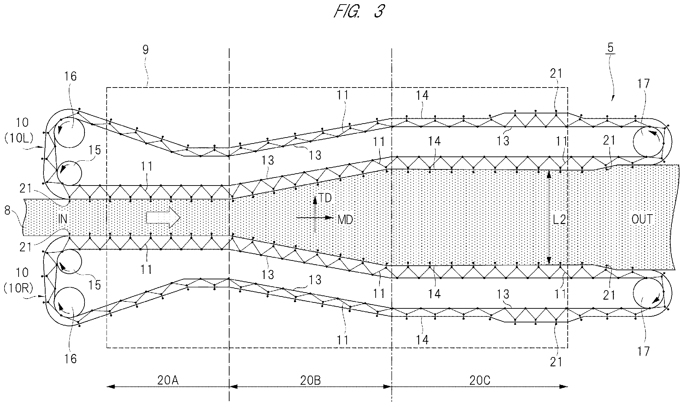

FIG. 2 and FIG. 3 are plan views schematically showing the structure of the stretching machine according to the embodiment. The stretching machine 5 has a pair of link devices 10. The pair of link devices 10 are spaced apart from each other in plan view. In the following description, one of the pair of link devices 10 is referred to as a "link device 10R", and the other of the pair of link devices 10 is referred to as a "link device 10L" in some cases.

In FIG. 2 and FIG. 3, the link device 10R is disposed on a right side (R side) with respect to the conveying direction (MD direction), and the link device 10L is disposed on a left side (L side) with respect to the conveying direction (MD direction). The link device 10R and the link device 10L are spaced apart from each other in the TD direction and face each other in the TD direction with the resin film 8 interposed therebetween. The resin film 8 is conveyed in the MD direction in the space between the link device 10R and the link device 10L. In other words, the space between the link device 10R and the link device 10L facing each other functions as a conveyance path for conveying the resin film 8.

Referring to FIG. 3, the stretching machine 5 is divided into three regions 20A, 20B, and 20C along the conveying direction (MD direction). The region 20A serves as a preheating region, the region 20B serves as a stretching region, and the region 20C serves as a heat setting region. The regions 20A, 20B, and 20C are arranged in this order in the conveying direction (MD direction).

The inlet of the resin film 8 in the stretching machine 5 (portion indicated by "IN" in FIG. 2 and FIG. 3) is present in the region 20A. Also, the outlet of the resin film 8 in the stretching machine 5 (portion indicated by "OUT" in FIG. 2 and FIG. 3) is present in the region 20C. Further, the region 20B in which the stretching process is performed is disposed between the region 20A in which the inlet of the resin film 8 is present and the region 20C in which the outlet of the resin film 8 is present.

A heat treatment unit 9 covers a part of the region 20A, all of the region 20B, and a part of the region 20C. Also, the heat treatment unit 9 covers the central parts of the link devices 10R and 10L, and heats the resin film 8 conveyed by the link devices 10R and 10L. The heat treatment unit 9 in this embodiment is composed of an oven capable of heating the resin film 8 to a desired temperature. The resin film 8 passes through the inside of the oven as the heat treatment unit 9 while being held by the link devices 10R and 10L.

### <Link Device>

Each of the link devices 10R and 10L includes a plurality of link mechanisms 11 coupled to constitute an endless chain. Each of the link mechanisms 11 has a clip 21 which is a jig for gripping the resin film 8. The resin film 8 is held by the clips 21 in the link mechanisms 11 constituting the link device 10R and the clips 21 in the link mechanisms 11 constituting the link device 10L. Namely, one side (R side/right side) of the resin film 8 is gripped by the plurality of clips 21 in the link device 10R, and the other side (L side/left side) of the resin film 8 is gripped by the plurality of clips 21 in the link device 10L.

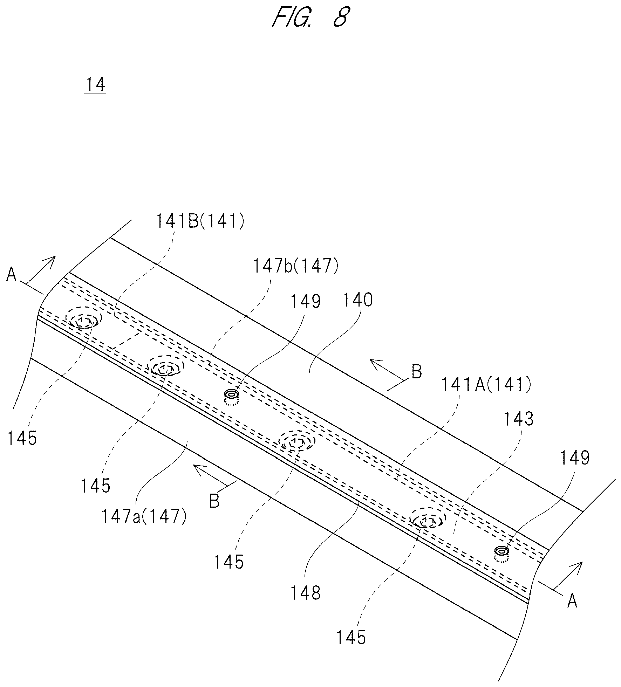

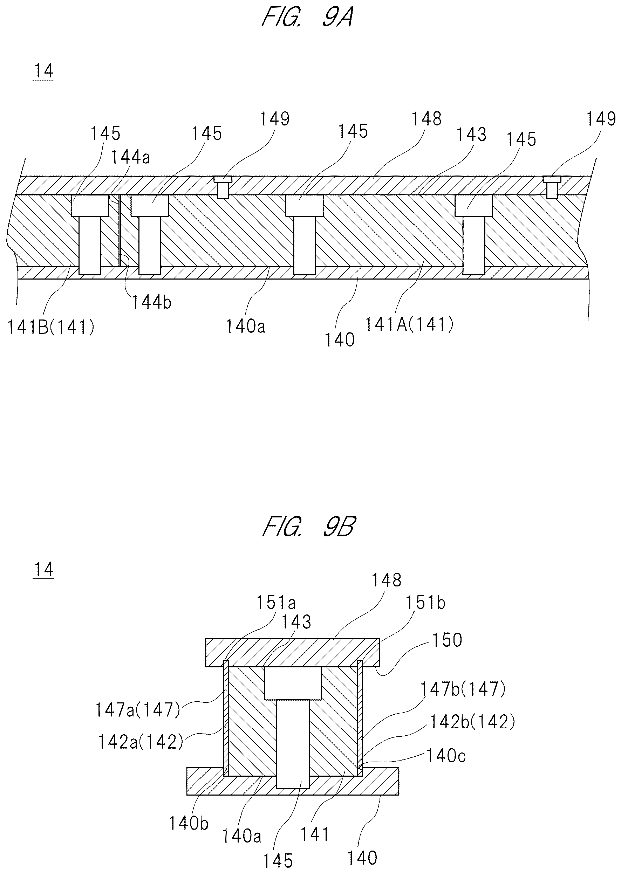

The link mechanisms 11 in the link devices 10R and 10L run on rails 13 and 14 which are a pair of rails for a stretching machine disposed on a support base (bed) 140 (see FIG. 8, FIG. 9A, and FIG. 9B). The rail 14 is disposed on an outer side of the rail 13 and surrounds the rail 13. From another viewpoint, the rail 13 is disposed on an inner side of the rail 14 and is surrounded by the rail 14.

The rails 13 and 14 are annularly disposed over the regions 20A, 20B, and 20C. More specifically, the rails 13 and 14 are annularly disposed over the regions 20A, 20B, and 20C so as to be turned back in the region 20A where the inlet of the resin film 8 is present and turned back in the region 20C where the outlet of the resin film 8 is present.

The link device 10R has three sprockets 15, 16, and 17 disposed on an inner side of the rail 13. Similarly, the link device 10L has three sprockets 15, 16, and 17 disposed on an inner side of the rail 13. The sprockets 15 and 16 of each of the link devices 10R and 10L are disposed in the region 20A, and the sprocket 17 of each of the link devices 10R and 10L is disposed in the region 20C. Understandably, the sprockets 15 and 16 are disposed outside the heat treatment unit 9 that covers a part of the region 20A. Further, the sprockets 17 are disposed outside the heat treatment unit 9 that covers a part of the region 20C. Namely, the sprockets 15, 16, and 17 of each of the link devices 10R and 10L are disposed outside the oven as the heat treatment unit 9.

The plurality of link mechanisms 11 in the link devices 10R and 10L are disposed on the rails 13 and 14 in a state of being movable along the rails 13 and 14. The sprockets 15, 16, and 17 of the link device 10R mesh with the plurality of link mechanisms 11 of the link device 10R. Therefore, when the sprockets 15, 16, and 17 rotate, a driving force acts on the plurality of link mechanisms 11 of the link device 10R, and the link mechanisms 11 move (run) along the rails 13 and 14.

The sprockets 15, 16, and 17 of the link device 10L mesh with the plurality of link mechanisms 11 of the link device 10L. Therefore, when the sprockets 15, 16, and 17 rotate, a driving force acts on the plurality of link mechanisms 11 of the link device 10L, and the link mechanisms 11 move (run) along the rails 13 and 14.

Namely, the rails 13 and 14 are guide rails for moving (running) the plurality of link mechanisms 11 in a predetermined direction. Each of the rails 13 and 14 is configured by connecting a plurality of partial rails described later in detail.

In the following description, for each of the link devices 10R and 10L shown in FIG. 3, the side facing the resin film 8 is referred to as a "film side", and the side opposite to the film side is referred to as a "return side" in some cases. Namely, the side on which the plurality of link mechanisms 11 move from the inlet (IN) toward the outlet (OUT) while the clips 21 are gripping the resin film 8 is the film side. Also, the side which is located on the side opposite to the film side and on which the plurality of link mechanisms 11 move from the outlet (OUT) toward the inlet (IN) while the clips 21 do not grip the resin film 8 is the return side.

An interval between adjacent link mechanisms 11 (referred to also as "link pitch" in some cases) of the plurality of link mechanisms 11 changes in accordance with an interval (separation distance) between the rail 13 and the rail 14. In other words, the interval between the adjacent link mechanisms 11 can be adjusted by adjusting the separation distance between the rail 13 and the rail 14.

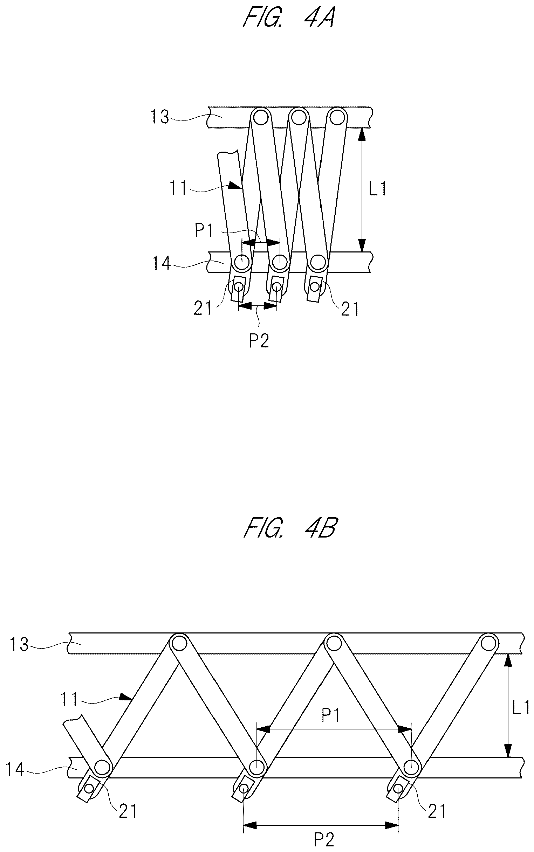

FIG. 4A and FIG. 4B are plan views schematically showing the link mechanisms and the rails according to the embodiment shown in FIG. 3. As shown in FIG. 4A and FIG. 4B, the angle formed by the adjacent link mechanisms 11 becomes larger and the pitch P1 between the adjacent link mechanisms 11 becomes larger as the separation distance L1 between the rails 13 and 14 becomes smaller. On the other hand, the angle formed by the adjacent link mechanisms 11 becomes smaller and the pitch P1 between the adjacent link mechanisms 11 becomes smaller as the separation distance L1 between the rails 13 and 14 becomes larger.

As described above, each link mechanism 11 has the clip 21 configured to grip the resin film 8. Therefore, the pitch P2 between the adjacent clips 21 also increases and decreases in accordance with the increase and decrease of the pitch P1 between the adjacent link mechanisms 11. Specifically, the pitch P1 between the link mechanisms 11 increases when the separation distance L1 between the rails 13 and 14 decreases. The pitch P2 between the clips 21 also increases when the pitch P1 between the link mechanisms 11 increases. In other words, the state transitions from the state shown in FIG. 4A to the state shown in FIG. 4B. On the other hand, the pitch P1 between the link mechanisms 11 decreases when the separation distance L1 between the rails 13 and 14 increases. The pitch P2 between the clips 21 also decreases when the pitch P1 between the link mechanisms 11 decreases. In other words, the state transitions from the state shown in FIG. 4B to the state shown in FIG. 4A.

Since each of the plurality of link mechanisms 11 includes the clip 21, the pitch P1 between the two adjacent link mechanisms 11 and the pitch P2 between the two clips 21 provided in these link mechanisms 11 are the same. Namely, P1=P2 holds in each of FIG. 4A and FIG. 4B.

### <Operation of Stretching Machine (Simultaneous Biaxial Stretching Machine)>

The resin film 8 supplied from the raw sheet cooling apparatus 4 to the stretching machine 5 is held by the link devices 10R and 10L at the inlet of the stretching machine 5. Specifically, the resin film 8 is gripped by the clips 21 in the link mechanisms 11 of the link devices 10R and 10L shown in FIG. 2 and FIG. 3. More specifically, one side of the resin film 8 in the width direction is gripped by the clips 21 in the link mechanisms 11 of the link device 10R, and the other side of the resin film 8 in the width direction is gripped by the clips 21 in the link mechanisms 11 of the link device 10L.

The resin film 8 whose both sides in the width direction are gripped by the clips 21 is conveyed from the inlet to the outlet of the stretching machine 5 along with the movement of the link mechanisms 11 including the clips 21, and passes through the region 20A (preheating region), the region 20B (stretching region), and the region 20C (heat setting region) in this order. The resin film 8 is stretched in the MD direction and the TD direction while passing through the region 20B (stretching region). Thereafter, the resin film 8 reaches the outlet through the region 20C (heat setting region) and is released from the clips 21. The resin film 8 released from the clips 21 is conveyed to the take-off apparatus 6 and is further conveyed from the take-off apparatus 6 to the winder apparatus 7.

As shown in FIG. 3, in the region 20A (preheating region), the interval (separation distance in the TD direction) L2 between the rails 13 and 14 of the link device 10R and the rails 13 and 14 of the link device 10L is almost constant. Therefore, the stretching process of the resin film 8 in the TD direction is not performed in the region 20A. Accordingly, the width (dimension in the TD direction) of the conveyed resin film 8 does not change and remains constant in the region 20A.

Also, in the region 20A, the interval (separation distance) L1 between the rail 13 and the rail 14 of the link device 10R on the film side is almost constant. Therefore, in the region 20A, the pitch P1 of the link mechanisms 11 of the link device 10R on the film side is almost constant, and thus the pitch P2 of the clips 21 of the link device 10R on the film side is also almost constant. Further, in the region 20A, the interval (separation distance) L1 between the rail 13 and the rail 14 of the link device 10L on the film side is almost constant. Therefore, in the region 20A, the pitch P1 of the link mechanisms 11 of the link device 10L on the film side is almost constant, and thus the pitch P2 of the clips 21 of the link device 10L on the film side is also almost constant. As a result, the stretching process of the resin film 8 in the MD direction is not performed in the region 20A. Namely, the stretching process of the resin film 8 in the TD direction and the MD direction is not performed in the region 20A.

Next, the operation of the stretching machine 5 in the region 20B will be described. In the region 20B, the interval (separation distance in the TD direction) between the rails 13 and 14 of the link device 10R and the rails 13 and 14 of the link device 10L gradually increases as advancing in the conveying direction (MD direction). Therefore, in the region 20B, the resin film 8 is pulled and stretched in the TD direction as it advances in the conveying direction (MD direction). In other words, in the region 20B, the width (dimension in the TD direction) of the resin film 8 gradually increases as it advances in the conveying direction (MD direction).

Also, in the region 20B, as advancing in the conveying direction (MD direction), the interval (separation distance) L1 between the rail 13 and the rail 14 of the link device 10R on the film side gradually decreases. Further, in the region 20B, as advancing in the conveying direction (MD direction), the interval (separation distance) L1 between the rail 13 and the rail 14 of the link device 10L on the film side also gradually decreases. Therefore, in the region 20B, the pitch P1 of the link mechanisms 11 of the link device 10R on the film side gradually increases as advancing in the conveying direction (MD direction), and thus the pitch P2 of the clips 21 of the link device 10R on the film side also gradually increases. Further, in the region 20B, the pitch P1 of the link mechanisms 11 of the link device 10L on the film side gradually increases as advancing in the conveying direction (MD direction), and thus the pitch P2 of the clips 21 of the link device 10L on the film side also gradually increases. As a result, in the region 20B, the resin film 8 is pulled and stretched in the MD direction as it advances in the conveying direction (MD direction).

Accordingly, in the region 20B, the resin film 8 is stretched (drawn) in the TD direction and the MD direction as it advances in the conveying direction (MD direction). In other words, in the region 20B, the stretching process in the TD direction and the MD direction is applied to the resin film 8.

Next, the operation of the stretching machine 5 in the region 20C will be described. In the region 20C, the interval (separation distance) L1 between the rail 13 and the rail 14 of the link device 10R on the film side is almost constant. Therefore, in the region 20C, the pitch P1 of the link mechanisms 11 of the link device 10R on the film side is almost constant, and thus the pitch P2 of the clips 21 of the link device 10R on the film side is also almost constant. Further, in the region 20C, the interval (separation distance) L1 between the rail 13 and the rail 14 of the link device 10L on the film side is almost constant. Therefore, in the region 20C, the pitch P1 of the link mechanisms 11 of the link device 10L on the film side is almost constant, and thus the pitch P2 of the clips 21 of the link device 10L on the film side is also almost constant. As a result, the stretching process of the resin film 8 in the MD direction is not performed in the region 20C.

As described above, in the region 20A, the pitch P1 of the link mechanisms 11 of the link device 10R on the film side is kept constant, and the pitch P1 of the link mechanisms 11 of the link device 10L on the film side is also kept constant. Thereafter, in the region 20B, the pitch P1 of the link mechanisms 11 of the link device 10R on the film side and the pitch P1 of the link mechanisms 11 of the link device 10L on the film side are gradually expanded. Then, in the region 20C, the pitch P1 of the link mechanisms 11 of the link device 10R on the film side is kept constant again, and the pitch P1 of the link mechanisms 11 of the link device 10L on the film side is also kept constant again. Therefore, on the film side of each of the link devices 10R and 10L, the pitch P1 of the link mechanisms 11 in the region 20C is larger than the pitch P1 of the link mechanisms 11 in the region 20A. From another viewpoint, on the film side of each of the link devices 10R and 10L, the pitch P2 of the clips 21 in the region 20C is larger than the pitch P2 of the clips 21 in the region 20A. From still another viewpoint, on the film side of each of the link devices 10R and 10L, the separation distance L1 between the rails 13 and 14 in the region 20C is smaller than the separation distance L1 between the rails 13 and 14 in the region 20A.

### <Configuration of Link Mechanism>

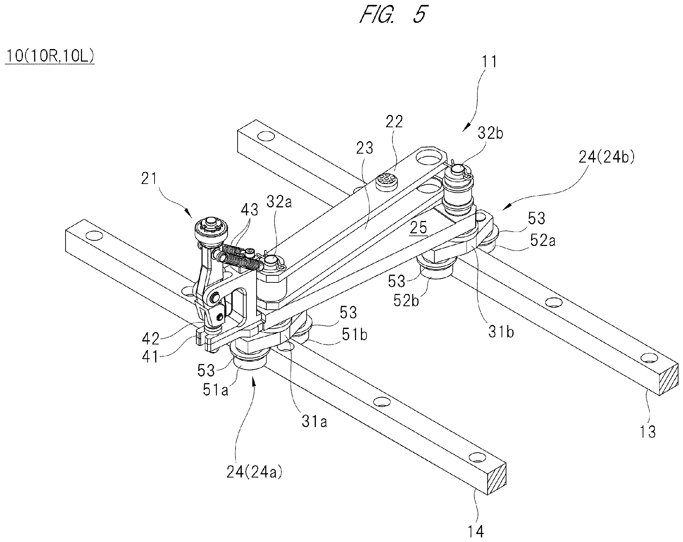

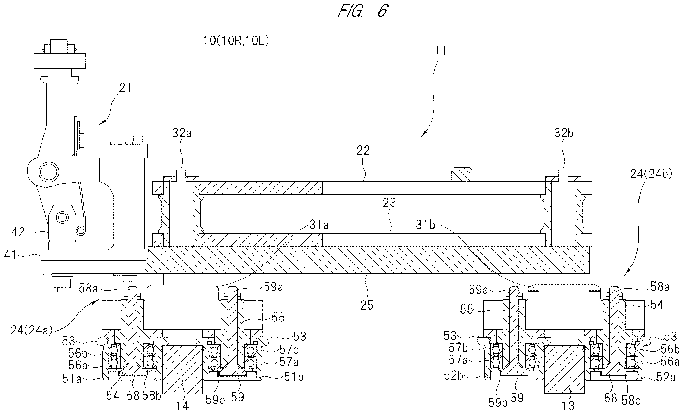

FIG. 5 is a perspective view showing one of the plurality of link mechanisms according to the embodiment shown in FIG. 3 in an enlarged manner. FIG. 6 is a cross-sectional view of the link mechanism according to the embodiment shown in FIG. 5.

As shown in FIG. 5 and FIG. 6, each of the link mechanisms 11 in the link devices 10R and 10L includes an upper link plate 22, a lower link plate 23, a pair of rail holders 24a and 24b, and a base member 25 extending across the pair of rail holders 24a and 24b in addition to the clip 21. One rail holder 24a is disposed on the rail 14, and the other rail holder 24b is disposed on the rail 13.

The upper link plate 22 and the lower link plate 23 are plate-shaped members that extend linearly in plan view. The base member 25 is common with the upper link plate 22 and the lower link plate 23 in that the base member 25 extends linearly in plan view, but the base member 25 is thicker than the upper link plate 22 and the lower link plate 23. In the following description, when there is no need to particularly distinguish between the rail holders 24a and 24b, they will be collectively referred to as "rail holder 24".

### <Rail Holder>

The rail holder 24a includes a roller holding portion 31a and a shaft 32a provided at the center of the roller holding portion 31a in the longitudinal direction. The roller holding portion 31a is disposed on the rail 14 so as to straddle the rail 14. Therefore, one end of the roller holding portion 31a disposed on the rail 14 in the longitudinal direction protrudes toward the inner side of the rail 14 (side facing the rail 13), and the other end of the roller holding portion 31a in the longitudinal direction protrudes toward the outer side of the rail 14 (side opposite to the side facing the rail 13). Also, when the roller holding portion 31a is disposed on the rail 14, the shaft 32a is located just above the rail 14.

As shown in FIG. 6, the shaft 32a of the rail holder 24a penetrates one ends of the upper link plate 22, the lower link plate 23, and the base member 25 in the longitudinal direction. A base end of the base member 25, a base end of the upper link plate 22, and a base end of the lower link plate 23 are skewered with the shaft 32a, and are rotatably coupled with each other via the shaft 32a. In other words, the shaft 32a is a rotation axis on the base end side of the upper link plate 22, the lower link plate 23, and the base member 25.

The rail holder 24b includes a roller holding portion 31b and a shaft 32b provided at the center of the roller holding portion 31b in the longitudinal direction. The roller holding portion 31b is disposed on the rail 13 so as to straddle the rail 13. Therefore, one end of the roller holding portion 31b disposed on the rail 13 in the longitudinal direction protrudes toward the inner side of the rail 13 (side facing the rail 14), and the other end of the roller holding portion 31b in the longitudinal direction protrudes toward the outer side of the rail 13 (side opposite to the side facing the rail 14). Also, when the roller holding portion 31b is disposed on the rail 13, the shaft 32b is located just above the rail 13.

The shaft 32b of the rail holder 24b penetrates one end (tip end) of the base member 25 in the longitudinal direction and protrudes from the base member 25. Namely, the tip end of the base member 25 of the link mechanism 11 and tip ends of the upper link plate 22 and the lower link plate 23 of another adjacent link mechanism 11 are rotatably coupled with each other via the shaft 32b of the link mechanism 11. From another viewpoint, the shaft 32b is a rotation axis on the tip end side of the upper link plate 22, the lower link plate 23, and the base member 25.

### <Clip>

The clip 21 is provided at the base end of the base member 25. The clip 21 includes a main body portion 41, a grip portion 42, a spring portion 43, and others. The main body portion 41 is fixed to the base end of the base member 25. The grip portion 42 is attached to the main body portion 41 so as to be operable in an up-down direction. The spring portion 43 applies a force to the grip portion 42 so as to operate the grip portion 42 downward. By making the grip portion 42 operate downward by the force received from the spring portion 43, the resin film 8 is sandwiched between the main body portion 41 and the grip portion 42. Namely, the resin film 8 is gripped by the clip 21. On the other hand, by making the grip portion 42 operate upward against the force received from the spring portion 43, the resin film 8 is released from the clip 21.

### <Guide Roller>

A pair of guide rollers 51a and 51b facing each other with the rail 14 interposed therebetween are provided in a lower portion of the rail holder 24a, and a pair of guide rollers 52a and 52b facing each other with the rail 13 interposed therebetween are provided in a lower portion of the rail holder 24b. The guide rollers 51a, 51b, 52a, and 52b are made of metal. Each of the guide rollers 51a, 51b, 52a, and 52b has a cylindrical shape with openings at both ends in the axial direction, and a flange 53 protruding in a radially outward direction is integrally formed on one end side (upper portion) in the axial direction.

The flanges 53 of the guide rollers 51a and 51b provided in a lower portion of the rail holder 24a are disposed on the rail 14, and the flanges 53 of the guide rollers 52a and 52b provided in a lower portion of the rail holder 24b are disposed on the rail 13. More specifically, the flange 53 of the guide roller 51a overlaps the outer edge of the upper surface of the rail 14 (on the side opposite to the side facing the rail 13), and the flange 53 of the guide roller 51b overlaps the inner edge of the upper surface of the rail 14 (on the side facing the rail 13). Also, the flange 53 of the guide roller 52a overlaps the outer edge of the upper surface of the rail 13 (on the side opposite to the side facing the rail 14), and the flange 53 of the guide roller 52b overlaps the inner edge of the upper surface of the rail 13 (on the side facing the rail 14). Thus, the entire link mechanism 11 is supported by the rails 13 and 14 via the guide rollers 51a and 51b of the rail holder 24a and the guide rollers 52a and 52b of the rail holder 24b.

In other words, the guide rollers 51a, 51b, 52a, and 52b are support rollers that support the link mechanism 11. More specifically, the guide rollers 51a, 51b, 52a, and 52b are cantilever support rollers that support the link mechanism 11 by means of the flanges 53 provided on one end side (upper portion) in the axial direction. From another viewpoint, the guide rollers 51a, 51b, 52a, and 52b are flanged rollers having the integrally formed flanges 53.

The four guide rollers 51a, 51b, 52a, and 52b have the same shape, structure, dimension, and the like. Therefore, by describing the shape, structure, and the like of the guide rollers 51a and 51b provided in the rail holder 24a in more detail, the shape, structure, and the like of the guide rollers 52a and 52b provided in the rail holder 24b will also be clarified.

As shown in FIG. 6, the roller holding portion 31a of the rail holder 24a is attached to the lower end of the shaft 32a protruding downward from the base member 25 so as to be rotatable about the shaft 32a as a rotation axis. Specifically, the roller holding portion 31a is attached to the lower end of the shaft 32a via bearings.

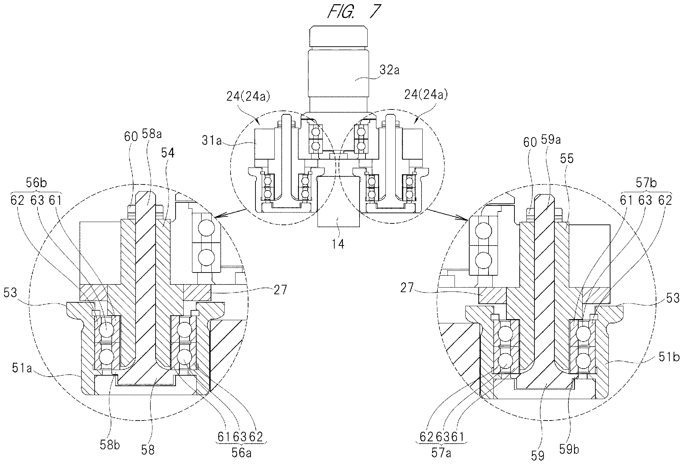

FIG. 7 is a partially enlarged cross-sectional view showing the guide rollers 51a and 51b and surrounding structures thereof according to the embodiment shown in FIG. 6. As shown in FIG. 7, shafts (hollow shaft 54 and flanged shaft 58) are provided on one end side of the roller holding portion 31a protruding toward the outer side of the rail 14, and other shafts (hollow shaft 55 and flanged shaft 59) are provided on the other end side of the roller holding portion 31a protruding toward the inner side of the rail 14. In the following description, the side close to the rail 14 with respect to the roller holding portion 31a is referred to as a lower side, and the side opposite to the rail 14 with respect to the roller holding portion 31a is referred to as an upper side in some cases.

### <Hollow Shaft>

The hollow shaft 54 is a hollow cylindrical member that extends in an up-down direction. One side (upper portion) of the hollow shaft 54 is press-fitted into a mounting hole provided on one end side of the roller holding portion 31a, and the other side (lower portion) of the hollow shaft 54 protrudes toward the lower side of the roller holding portion 31a. Similarly, one side (upper portion) of the hollow shaft 55 is press-fitted into a mounting hole provided on the other end side of the roller holding portion 31a, and the other side (lower portion) of the hollow shaft 55 protrudes toward the lower side of the roller holding portion 31a. Accordingly, since the hollow shafts 54 and 55 are attached in a state of being fixed to the roller holding portion 31a, the occurrence of detachment of the hollow shafts 54 and 55 due to vibrations applied to the rail holder 24 is suppressed. Namely, the vibration resistance of the hollow shafts 54 and 55 is improved.

Note that the hollow shafts 54 and 55 are not limited to those configured to be press-fitted into the roller holding portion 31a. For the attachment of the hollow shafts 54 and 55 to the roller holding portion 31a, any attachment method capable of fixing the hollow shafts 54 and 55 with vibration resistance can be applied.

Covers 27 are provided on the lower side of the roller holding portion 31a. Openings are formed in the covers 27, and the covers 27 are mounted by inserting, into the openings, protrusions of the hollow shafts 54 and 55 protruding toward the lower side of the roller holding portion 31a. The covers 27 are made of, for example, a metal material or a resin material, and are provided to prevent splashed oil or the like from entering bearings 56a, 56b, 57a, and 57b described below when the link mechanism 11 moves (runs) on the rails 13 and 14.

### <Bearing>

The guide roller 51a is attached to the protrusion of the hollow shaft 54 protruding toward the lower side of the roller holding portion 31a so as to be rotatable on the lower side of the cover 27. Specifically, the other side (lower portion) of the hollow shaft 54 is inserted into the guide roller 51a, and a bearing 56a and a bearing 56b are interposed between the guide roller 51a and the lower portion of the hollow shaft 54. The bearing 56a and the bearing 56b are provided so as to overlap in the axial direction of the hollow shaft 54. Namely, the guide roller 51a is rotatably supported with respect to the hollow shaft 54 by the two bearings 56a and 56b. Since the bearings 56a and 56b overlap in two upper and lower stages, the bearing 56a is referred to as a "lower bearing 56a", and the bearing 56b is referred to as an "upper bearing 56b" in some cases in the following description.

Also, the guide roller 51b is attached to the protrusion of the hollow shaft 55 protruding toward the lower side of the roller holding portion 31a so as to be rotatable on the lower side of the cover 27. The other side (lower portion) of the hollow shaft 55 is inserted into the guide roller 51b, and a bearing 57a and a bearing 57b are interposed between the guide roller 51b and the lower portion of the hollow shaft 55. The bearing 57a and the bearing 57b are provided so as to overlap in the axial direction of the hollow shaft 55. Namely, the guide roller 51b is rotatably supported with respect to the hollow shaft 55 by the two bearings 57a and 57b. Since the bearings 57a and 57b overlap in two upper and lower stages, the bearing 57a is referred to as a "lower bearing 57a", and the bearing 57b is referred to as an "upper bearing 57b" in some cases in the following description.

Each of the bearings 56a and 56b is a rolling bearing (ball bearing) including an inner ring 61, an outer ring 62 surrounding the inner ring 61, and a plurality of rolling elements (balls) 63 disposed between the inner ring 61 and the outer ring 62. A lubricant such as grease is filled in the gap between the inner ring 61 and the outer ring 62. Note that the bearing 57a and the bearing 57b supporting the guide roller 51b are non-contact sealed bearings identical to the bearing 56a and the bearing 56b described above. Namely, the bearing 57a and the bearing 57b each include the inner ring 61, the outer ring 62, and the rolling elements (balls) 63, and a lubricant such as grease is filled between the inner ring 61 and the outer ring 62.

### <Flanged Shaft>

The flanged shaft 58 includes a shaft portion 58a and a flange portion 58b. The shaft portion 58a extends along the axial direction (up-down direction) of the hollow shaft 54 and is inserted into the hollow shaft 54 from the lower side. A part (upper portion) of the shaft portion 58a protrudes toward an upper side of the hollow shaft 54. The flanged shaft 58 is fixed to the hollow shaft 54 by a retaining member 60 such as a nut via an anti-loosening member such as a washer at the protruding upper portion of the shaft portion 58a.

The flanged shaft 59 includes a shaft portion 59a and a flange portion 59b. The shaft portion 59a extends along the axial direction (up-down direction) of the hollow shaft 55 and is inserted into the hollow shaft 55 from the lower side. A part (upper portion) of the shaft portion 59a protrudes toward an upper side of the hollow shaft 55. The flanged shaft 59 is fixed to the hollow shaft 55 by a retaining member 60 such as a nut via an anti-loosening member such as a washer at the protruding upper portion of the shaft portion 59a.

As described above, the hollow shafts 54 and 55 are attached to the roller holding portion 31a with improved vibration resistance. Therefore, the vibration resistance of the flanged shafts 58 and 59 fixed to the hollow shafts 54 and 55 is also improved similarly.

The flange portion 58b is formed on a lower side of the shaft portion 58a. The flange portion 58b is a support portion that supports the lower bearing 56a interposed between the hollow shaft 54 and the guide roller 51a from the lower side. Specifically, the flange portion 58b is in contact with a lower side of the inner ring 61 of the lower bearing 56a to support the lower bearing 56a from the lower side. The flange portion 59b of the flanged shaft 59 is formed on the lower side of the shaft portion 59a. Similarly to the flange portion 58b, the flange portion 59b is a support portion that supports the lower bearing 57a interposed between the hollow shaft 55 and the guide roller 51b from the lower side. Specifically, the flange portion 59b is in contact with a lower side of the inner ring 61 of the lower bearing 57a to support the lower bearing 57a from the lower side.

In this way, the flanged shafts 58 and 59 can support the guide rollers 51a and 51b without interfering with the rotation of the guide rollers 51a and 51b.

When the rail holder 24 moves on the rail 14, the guide roller 51a moves along an outer side surface of the rail 14 while rotating. When the rail holder 24 moves on the rail 14, the guide roller 51b moves along an inner side surface of the rail 14 while rotating. Similarly, when the rail holder 24 moves on the rail 13, the guide roller 52a moves along an outer side surface of the rail 13 while rotating. When the rail holder 24 moves on the rail 13, the guide roller 52b moves along an inner side surface of the rail 13 while rotating.

### <Rail for Stretching Machine>

The rails 13 and 14 for the stretching machine on which the link mechanism 11 described above moves (runs) will be described in detail. FIG. 8 is an external perspective view of a part of the rail 14 according to the embodiment. FIG. 9A is a cross-sectional view of the rail 14 according to the embodiment taken along a line A-A in FIG. 8. FIG. 9B is a cross-sectional view of the rail 14 according to the embodiment taken along a line B-B in FIG. 8. Hereinafter, the rail 14 will be described as the rail for the stretching machine. However, since the rail 13 also has a similar structure to the rail 14, the descriptions given for the rail 14 can also be applied to the rail 13.

The rail 14 is configured by connecting a plurality of partial rails 141. The partial rail 141 has side surfaces 142a and 142b (collectively referred to as side surface 142), an upper surface 143, and end surfaces 144a and 144b. The upper surface 143 is a surface that faces the link mechanism 11 and is connected to the two side surfaces 142a and 142b. The side surfaces 142a and 142b are surfaces that are parallel to a plane perpendicular to the upper surface 143. The upper surface 143 and the side surfaces 142a and 142b are surfaces whose longitudinal direction is the direction in which the partial rail 141 extends, that is, the direction in which the rail 14 extends (extending direction).

The end surfaces 144a and 144b are surfaces that are formed at both ends in the direction in which the partial rail 141 extends, and are perpendicular to the upper surface 143 and the side surfaces 142a and 142b. Of the plurality of partial rails 141, the end surface 144a of a partial rail 141A and the end surface 144b of a partial rail 141B face each other. In other words, when the partial rails 141 are fixed to the support base (bed) 140, the end surface 144a of the partial rail 141A and the end surface 144b of the partial rail 141B become a joint surface where the partial rails 141 are connected to each other.

Each partial rail 141 is fixed to the support base (bed) 140 by a plurality of bolts 145 inserted from the side of the upper surface 143. Specifically, a groove is formed on the upper surface of the support base 140 along the direction in which the rail 14 extends, and each partial rail 141 is arranged and fixed on a bottom surface 140a of this groove. In other words, the bottom surface 140a is the placement surface on which the rail 14 is arranged.

The partial rails 141 have different lengths along the direction in which the rail 14 extends, depending on the positions where the partial rails 141 are arranged on the support base 140. In this embodiment, the length of the partial rail 141 along the direction in which the rail 14 extends is about 2 m at maximum.

The rail 14 has plate members 147a and 147b (collectively referred to as plate member 147) and a fixing plate 148. The plate member 147 is a thin plate made of, for example, a carbon tool steel material (SK material), and extends in the direction in which the rail 14 extends. One plate member 147a is attached across the side surfaces 142a of all the partial rails 141 constituting the rail 14. Similarly, one plate member 147b is attached across the side surfaces 142b of all the partial rails 141 constituting the rail 14.

Note that the rail 14 is not limited to having one plate member 147a and one plate member 147b attached thereto, and one plate member 147a and one plate member 147b may be attached across a plurality of partial rails 141. For example, one plate member 147a and one plate member 147b may be attached to the side surfaces 142a and 142b for each of the regions 20A, 20B, and 20C. Alternatively, a plurality of plate members 147a and a plurality of plate members 147b may be attached to the side surfaces 142a and 142b for each of the regions 20A, 20B, and 20C. In other words, the length of the plate member 147 in its extending direction only needs to be longer than the length of the partial rail 141 in its extending direction.

As shown in FIG. 9B, a lower end surface of the plate member 147a is located on the bottom surface 140a. A lower portion of the plate member 147a is inserted into a space between the side surface 142a of the partial rail 141 arranged on the bottom surface 140a and a mounting side surface 140b of the support base 140, which is a surface intersecting the bottom surface 140a. In other words, the plate member 147a is attached by being sandwiched between the side surface 142a of the rail 14 and the mounting side surface 140b of the support base 140.

Similarly, a lower end surface of the plate member 147b is located on the bottom surface 140a. A lower portion of the plate member 147b is inserted into a space between the side surface 142b of the partial rail 141 arranged on the bottom surface 140a and a mounting side surface 140c of the support base 140 intersecting the bottom surface 140a. In other words, the plate member 147b is attached by being sandwiched between the side surface 142b of the rail 14 and the mounting side surface 140c of the support base 140. Consequently, the plate members 147 are fixed by being sandwiched between the mounting side surfaces 140b and 140c of the support base 140 and the side surfaces 142a and 142b of the rail 14 in a direction perpendicular to the side surfaces 142a and 142b. In this way, it is possible to prevent the plate member 147 from coming off the side surface 142.

Further, the plate members 147 may be fixed by being adhered to the side surfaces 142a and 142b of the rail 14 using an adhesive. In this way, it is possible to prevent the plate members 147, which are sandwiched between the mounting side surfaces 140b and 140c and the side surfaces 142a and 142b of the rail 14, from coming off the side surfaces 142.

The fixing plate 148 extends along the direction in which the rail 14 extends. In the width direction of the rail 14 intersecting the direction in which the rail 14 extends and the up-down direction, the length (width) of the fixing plate 148 is larger than the length (width) of the rail 14. The fixing plate 148 is attached to the upper surface 143 of the partial rail 141 by means of mounting bolts 149. Note that the fixing plate 148 is not limited to being attached to the upper surface 143 by means of the mounting bolts 149. For example, holes into which the bolts 145 for fixing the partial rail 141 to the support base 140 are inserted may be formed in the fixing plate 148, and the fixing plate 148 may be fixed to the upper surface 143 by being fastened together with the bolts 145 inserted into the holes.

Mounting grooves 151a and 151b that extend in the direction in which the rail 14 extends are formed on a lower surface 150 of the fixing plate 148. Specifically, the fixing plate 148 that is wider than the rail 14 has regions of the lower surface 150 protruding relative to both ends of the rail 14 in the width direction. The mounting groove 151a is formed in the region on one side of the lower surface 150 protruding relative to the rail 14 in the width direction, and the mounting groove 151b is formed in the region on the other side of the lower surface 150 protruding relative to the rail 14 in the width direction.

An upper portion of the plate member 147a is inserted into the mounting groove 151a, and an upper portion of the plate member 147b is inserted into the mounting groove 151b. Consequently, the plate member 147 is fixed by being sandwiched from above and below between the fixing plate 148 and the bottom surface 140a of the groove of the support base 140. As a result, the plate members 147, which are sandwiched between the mounting side surfaces 140b and 140c and the side surfaces 142a and 142b of the rail 14, are further sandwiched from above and below, thereby preventing the plate members 147 from coming off the side surfaces 142.

By attaching the plate members 147 to the side surfaces 142a and 142b of the rail 14 as described above, the joint portions between the partial rails 141 are less likely to be exposed to the running surfaces of the guide rollers 51a and 51b on the rail 14. In other words, it is possible to prevent the guide rollers 51a and 51b from passing over the step or the like that is formed at the joint portion between the end surface 144a of the partial rail 141A and the end surface 144b of the partial rail 141B.

By the guide rollers 51a and 51b running on the partial rail 141A toward the partial rail 141B, a force acting in a direction intersecting the direction in which the rail 14 extends is applied to the partial rail 14A. In the case where the plate member 147 is not provided unlike the embodiment, the end surface 144a of the partial rail 141A is deformed in a direction intersecting the direction in which the rail 14 extends, relative to the end surface 144b of the partial rail 141B due to the running of the guide rollers 51a and 51b, whereby the step is formed. When the guide rollers 51a and 51b further run toward the partial rail 141B, they collide with the end surface 144b of the partial rail 141B and run to pass over this end surface 144b. In other words, the guide rollers 51a and 51b generate vibrations because they pass over the step formed at the joint portion between the partial rail 141A and the partial rail 141B. As described above, the partial rail 141 has a length of about 2 m at maximum. Therefore, vibrations occur at intervals of every 2 m or shorter as the guide rollers 51a and 51b run.

In contrast, in this embodiment, the plate member 147 is attached to the side surface 142 of the rail 14. Therefore, the guide rollers 51a and 51b run on the plate members 147, so that they can run without passing over the step formed at the joint portion between the partial rail 141A and the partial rail 141B. Since the guide rollers 51a and 51b can run without passing over the step, the generation of vibrations that occur when passing over the step can be suppressed.

In the above embodiment, the rail 14 has been described as having the fixing plate 148, but the rail 14 is not necessarily required to have the fixing plate 148. In other words, it is sufficient that the plate members 147 are fixed by being sandwiched between the side surfaces 142 of the partial rail 141 and the mounting side surfaces 140b and 140c. In this case, it is preferable that the plate members 147 and the side surfaces 142 of the partial rail 141 may be fixed by adhesive.

Furthermore, the support base 140 is not limited to having the bottom surface 140a and the mounting side surfaces 140b and 140c intersecting the bottom surface 140a formed by forming the groove in the support base 140. For example, the bottom surface 140a and the mounting side surfaces 140b and 140c may be formed on the support base 140 without forming the groove in the support base 140. For example, the upper surface of the support base 140 may be defined as a placement surface on which the rail 14 is arranged, and protrusions that protrude upward from this placement surface and extend along the direction in which the rail 14 extends may be formed. It is sufficient that the side surfaces of the protrusions may be used as the mounting side surfaces, and the plate members 147 may be attached by being sandwiched between the side surfaces of the protrusions and the side surfaces 142 of the partial rail 141.

In addition, in the embodiment, the partial rail 141 has the plate members 147 attached to both the side surface 142a and the side surface 142b. However, the plate member 147 may be attached to either the side surface 142a or the side surface 142b of the partial rail 141. In this case, for example, in the partial rail 141 arranged in the region 20B, the plate member 147 may be attached only to the side surface 142 on the side opposite to the side facing the rail 13, that is, on the film side. In addition, in the partial rail 141 arranged in the region 20C, the plate member 147 may be attached only to the side surface 142 on the side facing the rail 13, that is, on the return side.

In this embodiment, the plate member 147 is attached to at least one of the two side surfaces 142 of the rail 14 which is configured by connecting a plurality of partial rails. The length of the plate member 147 along the extending direction of the rail 14 is longer than the length of the partial rail 141 along the extending direction. This prevents the joint portion between the partial rails 141 from being exposed on the running surfaces of the guide rollers 51a and 51b. In other words, the guide rollers 51a and 51b are less likely to run over the step formed at the joint portion between the partial rail 141A and the partial rail 141B, thereby preventing the generation of vibrations due to the running of the guide rollers 51a and 51b.

In this way, the influence due to vibrations on the configurations (peripheral machinery) arranged around the guide rollers 51a and 51b can be reduced, for example, the leakage of grease from the bearings 56a, 56b, 57a, and 57b can be suppressed, and the service life of the peripheral machinery can be extended. As described above, the generation of vibrations that occur due to the running of the guide rollers 51a and 51b and the influence on the peripheral machinery due to the vibrations can be reduced, allowing the link mechanisms 11 to run at a higher speed. Furthermore, since the link mechanisms 11 can move at a higher speed, the time required to produce the resin film 8 can be reduced, which can contribute to improved productivity of the resin film 8.

In the foregoing, the invention made by the inventors of this application has been specifically described based on the embodiment. However, it is needless to say that the present invention is not limited to the embodiment or example described above and various modifications can be made within the range not departing from the gist of the present invention. For example, the guide rollers in each link mechanism 11 are not limited to flanged rollers. Also, the bearings supporting the guide rollers are not limited to the non-contact ball bearings, and may be, for example, contact sealed bearings.

### REFERENCE SIGNS LIST

5 stretching machine
11 link mechanism
13, 14 rail
140 support base (bed)
141, 141A, 141B partial rail
142, 142a 142b side surface
147, 147a, 147b plate member

## Claims

1. A stretching machine comprising:
a plurality of link mechanisms coupled to constitute an endless chain; and
a rail on which the link mechanisms run,
wherein the rail is configured by connecting a plurality of partial rails along an extending direction in which the rail extends,
wherein a plate member is attached to at least one of two side surfaces of the rail, and
wherein a length of the plate member along the extending direction is longer than a length of the partial rail along the extending direction.

2. The stretching machine according to claim 1, further comprising a support base on which the rail is arranged,
wherein a mounting side surface having a surface intersecting a placement surface on which the rail is arranged is formed on the support base, and
wherein the plate member is sandwiched between the mounting side surface and the side surface of the rail.

3. The stretching machine according to claim 2,
wherein the plate member is adhered to the side surface of the rail.

4. The stretching machine according to claim 2, further comprising a fixing plate provided on an upper surface of the rail, the upper surface being connected to the two side surfaces,
wherein the plate member is sandwiched between the placement surface of the support base and the fixing plate.

5. A rail for a stretching machine on which link mechanisms of the stretching machine run, the rail comprising:
a plurality of partial rails connected along an extending direction in which the rail extends; and
a plate member attached to at least one of two side surfaces of the rail,
wherein a length of the plate member along the extending direction is longer than a length of the partial rail along the extending direction.

6. The rail for the stretching machine according to claim 5, further comprising a support base on which the rail is arranged,
wherein a mounting side surface having a surface intersecting a placement surface on which the rail is arranged is formed on the support base, and
wherein the plate member is sandwiched between the mounting side surface and the side surface of the rail.

7. The rail for the stretching machine according to claim 6,
wherein the plate member is adhered to the side surface of the rail.

8. The rail for the stretching machine according to claim 6, further comprising a fixing plate provided on an upper surface of the rail, the upper surface being connected to the two side surfaces,
wherein the plate member is sandwiched between the placement surface of the support base and the fixing plate.
